(19) Europäisches Patentamt
European Patent Office
Office européen des brevets

(11) **EP 4 397 558 B1**

(12) **EUROPEAN PATENT SPECIFICATION**

(45) Date of publication and mention
of the grant of the patent:
**27.08.2025 Bulletin 2025/35**

(21) Application number: **23210536.1**

(22) Date of filing: **17.11.2023**

(51) International Patent Classification (IPC):
***B60W 30/12*** *(2020.01)*

(52) Cooperative Patent Classification (CPC):
**B60W 30/12;** B60W 50/0205; B60W 2420/403;
B60W 2552/53; B60W 2556/40

(54) **VEHICLE CONTROL SYSTEM AND METHOD**

FAHRZEUGSTEUERUNGSSYSTEM UND -VERFAHREN

SYSTÈME ET PROCÉDÉ DE COMMANDE DE VÉHICULE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **04.01.2023 KR 20230001402**

(43) Date of publication of application:
**10.07.2024 Bulletin 2024/28**

(73) Proprietor: **Hyundai Mobis Co., Ltd.
Gangnam-gu
Seoul 06141 (KR)**

(72) Inventor: **KIM, Nam Soo
17001 Yongin-si, Gyeonggi-do (KR)**

(74) Representative: **Frenkel, Matthias Alexander
Wuesthoff & Wuesthoff
Patentanwälte und Rechtsanwalt PartG mbB
Schweigerstraße 2
81541 München (DE)**

(56) References cited:
DE-A1- 102019 107 224    US-A1- 2008 291 276
US-A1- 2015 367 778    US-A1- 2020 070 826

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

1. Technical Field

The present invention relates to a vehicle control system and method for controlling a vehicle to keep driving in a current driving lane.

2. Background

An autonomous vehicle employs an advanced driver assistance system (ADAS) to free a driver from simple work, such as steering wheel and pedal manipulation during driving, and prevent accidents caused by a driver's carelessness. Therefore, people's interest therein is currently increasing.

The advanced driver assistance system includes a highway driving assist (HDA) function of assisting a vehicle to travel along the center of a driving lane, and lane following assist (KFA) and lane keeping assist (LKA) functions of assisting a vehicle not to deviate from the lines of a driving lane. When such functions are performed, a vehicle may recognize the lines of a driving lane, in which the vehicle is currently driving, by using a front camera included in the vehicle, and perform steering control along the recognized lines of the driving lane. Therefore, steering control performed by these kinds of assistance functions requires precise recognition of lines.

However, when steering control is performed using only curvature information of a line of a driving lane, this may be problematic in that lines are mis-recognized due to diversity of a driving road environment in which a vehicle is driving, and steering is mis-controlled. For example, if there is a stretch diverged or expanded from a driving lane in which a vehicle is driving, when the vehicle enters the stretch, the vehicle mis-recognizes a line of the diverged or expanded stretch as a line of the driving lane, and thus steering to the stretch may be performed.

The foregoing described as the background is intended merely to aid in the understanding of the background of the present invention, and is not intended to mean that the present invention falls within the purview of the related art already known to those skilled in the art.

US 2020/0070826 A1 discloses a lane keep control apparatus. In the document the apparatus is described to include a first calculator, wherein the first calculator includes a first determiner, a second determiner, a third determiner, and a second calculator, wherein the first determiner is configured to determine whether a preceding vehicle travels on a traveling lane of an own vehicle, the second determiner is configured to determine whether a blinker of the preceding vehicle blinks, the third determiner is configured to determine whether widening of one or both of lane lines is present, and the second calculator is configured to set, on a condition that the blinker of the preceding vehicle is determined as blinking and the widening is determined as being present, a target traveling course on the basis of one of the lane lines positioned on opposite side of the other of the lane lines that is positioned on a side on which the blinker of the preceding vehicle is determined as blinking.

US 2015/0367778 A1 discloses that lane feature data is processed to compute a feed-forward lane curvature of a left lane boundary and a right lane boundary, a look-ahead lane width and a near lane width are computed based on left and right lane boundaries, a lane width increase is computed to detect a lane split or lane merge based on differences between increasing lane widths, a side of the vehicle on which the lane split or merge occurred is identified or determined, the lane boundary on the side on which the lane split or merged occurred is ignored, and a single-sided lane centering calculation is performed based on the non-ignored lane boundary.

SUMMARY

The present invention has been made to solve such a problem, and is to provide a vehicle control system and method by which whether the lane width of a lane in which a vehicle is driving increases is determined, and driving of the vehicle is controlled on the basis of the determination.

The technical subjects pursued in the present invention may not be limited to the above-mentioned technical subjects, and other technical subjects which are not mentioned may be clearly understood, through the following descriptions, by those skilled in the art to which the present invention pertains.

The invention is defined by the appended claims.

According to a vehicle control system and method of the present invention, even when the lane width of a driving lane, in which a vehicle is driving, increases, a line positioned opposite to a side at which the lane width increases is recognized and driving of the vehicle is controlled, thereby preventing mis-controlling of lane following assist (LFA), lane keeping assist (LKA), and highway driving assist (HDA) functions which serve as transverse control in an advanced driver assistance system.

Advantageous effects obtainable from the present invention may not be limited to the above-mentioned effects, and other effects which are not mentioned may be clearly understood, through the following descriptions, by those skilled in the art to which the present invention pertains.

BRIEF DESCRIPTION OF THE DRAWINGS

FIG. 1 is a block diagram illustrating a configuration of a vehicle control system according to an embodiment of the present invention;

FIG. 2 is a diagram illustrating control of a vehicle having entered a stretch in which a lane width increases, according to an embodiment of the present invention; and

FIG. 3 is a flowchart of a vehicle control method according to an embodiment of the present invention.

DETAILED DESCRIPTION OF THE EXEMPLARY EMBODIMENTS

Terms including an ordinal number such as "first", "second", or the like may be used to describe various elements, but the elements are not limited to the terms. The above terms are used only for the purpose of distinguishing one element from another element.

In the case where an element is referred to as being "connected" or "coupled" to any other element, it should be understood that another element may be provided therebetween, as well as that the element may be directly connected or coupled to the other element. In contrast, in the case where an element is "directly connected" or "directly coupled" to any other element, it should be understood that no other element is present therebetween.

A singular expression may include a plural expression unless they are definitely different in a context.

As used herein, the expression "include" or "have" are intended to specify the existence of mentioned features, numbers, steps, operations, elements, components, or combinations thereof, and should be construed as not precluding the possible existence or addition of one or more other features, numbers, steps, operations, elements, components, or combinations thereof.

Hereinafter, embodiments disclosed in the present specification will be described in detail with reference to the accompanying drawings, and the same or similar elements are given the same and similar reference numerals, so duplicate descriptions thereof will be omitted.

A unit or a control unit included in the name "control unit" is merely a term widely used for naming a controller configured to control a specific function of a vehicle, but does not mean a generic function unit. For example, the controller may include a communication device configured to communicate with a sensor or another control unit, a memory configured to store an operation system, a logic command, or input/output information, and at least one processor configured to perform determination, calculation, decision or the like which are required for responsible function controlling.

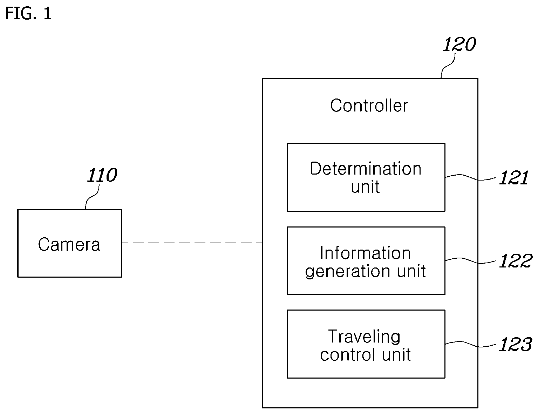

First, referring to FIG. 1, a configuration of a vehicle control system according to an embodiment of the present invention is described.

FIG. 1 is a block diagram illustrating a configuration of a vehicle control system according to an embodiment of the present invention.

Referring to FIG. 1, a vehicle control system according to an embodiment of the present invention may include a camera 110 and a controller 120. FIG. 1 shows mainly elements related to an embodiment of the present invention, and thus it is obvious that fewer or more elements may be included when a real vehicle control system is implemented.

Hereinafter, each element will be described.

The camera 110 is an image capturing device mounted at a vehicle, and may be at least one camera among a front camera, a side camera, and a rear camera according to the position in which the camera is mounted. The camera 110 according to an embodiment of the present invention is assumed as a front camera mounted at a front of the vehicle. The camera 110 may be mounted at the front of the vehicle to capture an image of the foreground of the vehicle. In addition, multiple cameras 110 may be arranged at the front of the vehicle, and an image of the foreground of the vehicle may be captured by means of the multiple cameras. The camera 110 may collect image information obtained by capturing an image of the foreground of the vehicle, and provide the collected information to the controller 120.

The controller 120 may recognize at least one piece of information among traffic information and road information, the traffic and roads of which are positioned ahead of the vehicle, based on the image information obtained by the camera 110. For example, the controller 120 may recognize a driving lane ahead of the vehicle, in which the vehicle is driving. Thereafter, the controller 120 may control driving of the vehicle, based on information on the recognized driving lane. An aspect of the present invention is to, even in a case of occurrence of a change, such as increasing of the lane width of a driving lane in which a vehicle is driving, keep controlling the vehicle to travel in the current driving lane. Therefore, the controller 120 may determine an expected lane width of the driving lane over time, determine whether a real lane width of the driving lane increases at a time point at which the determined expected lane width increases, and when it is determined that the real lane width increases, control driving, based on information on a line, among both lines of the driving lane, positioned in an opposite direction of a direction in which the lane width increases. To this end, the controller 120 may include a determination unit 121, an information generation unit 122, and a driving control unit 123. Hereinafter, each element will be described.

The determination unit 121 may recognize a driving lane in image information provided from the camera 110, and determine an expected lane width of the driving lane, based on information related to the recognized driving lane. Specifically, the determination unit 121 may determine an expected lane width of the driving lane, based on a longitudinal distance of the vehicle and at least one piece of information among an offset, a heading angle, a curvature, and a curvature derivative value of a line of the driving lane in information related to the recognized driving lane.

For example, the determination unit 121 may determine an expected lane width through a line equation, based on a longitudinal distance of the vehicle and an offset, a heading angle, a curvature, and a curvature derivative value of a line of the driving lane. The determination unit 121 may determine an expected lane width through a line equation as Equation 1 below.

[Equation 1]

$$Y = \alpha + \beta X + \gamma X^2 + \delta X^3$$

**In Equation** 1, X may denote a longitudinal distance of the vehicle, and Y may denote the distance from the vehicle to the left line or the right line. $\alpha$ may indicate an offset of the line, $\beta$ may indicate a heading angle, $\gamma$ may indicate the curvature of the line, $\delta$ may indicate the curvature derivative value of the line. In addition, the determination unit 121 may apply the curvature and the curvature derivative value of the line in consideration of a correction factor.

The determination unit 121 may determine an expected lane width over time through the described line equation, based on information related to a driving lane. That is, the determination unit 121 may determine an expected lane width that is expected over time with respect to a current location of the vehicle. For example, the expected lane width may be a value obtained by adding the distance from the vehicle to the left line and the distance from the vehicle to the right line, which are determined through Equation 1 described above, respectively.

As time passes, an offset, a heading angle, a curvature, and a curvature derivative value of a line of a driving lane in which the vehicle is driving and the longitudinal distance of the vehicle may change. Therefore, the expected lane width may be determined based on an offset, a heading angle, a curvature, and a curvature derivative value of a line, and the longitudinal distance of the vehicle which are obtained in consideration of a change over time. For example, an offset, a heading angle, a curvature, and a curvature derivative value of a driving lane line which are obtained in consideration of a change over time may be determined through Equation 2 below.

[Equation 2]

$$\alpha_{k+1} = \alpha_k + \beta_k \Delta X + \gamma_k \Delta X^2 + \delta_k \Delta X^3 - \Delta Y$$

$$\beta_{k+1} = \beta_k + 2\gamma_k \Delta X + 3\delta_k \Delta X^2 + \Delta \theta$$

$$\gamma_{k+1} = \gamma_k + 3\delta_k \Delta X$$

$$\delta_{k+1} = \delta_k$$

Here, $\alpha_k$, $\beta_k$, $\gamma_k$, and $\delta_k$ may denote an offset, a heading angle, a curvature, and a curvature derivative value of a line at a random time of k seconds, and $\alpha_{k+1}$, $\beta_{k+1}$, $\gamma_{k+1}$, and $\delta_{k+1}$ may denote an offset, a heading angle, a curvature, and a curvature derivative value of a line at a random time of (k+1) seconds. $\Delta X$, $\Delta Y$, and $\Delta \theta$ may be determined through Equation 3 below.

[Equation 3]

$$\Delta X = V \Delta T cos(\theta + \Delta \theta)$$

$$\Delta Y = V \Delta T sin(\theta + \Delta \theta)$$

$$\Delta \theta = Yawrate \Delta T$$

Here, $\Delta X$ may denote the longitudinal displacement of the vehicle for $\Delta T$, $\Delta Y$ may denote the transverse displacement of the vehicle for $\Delta T$, and $\Delta \theta$ may denote the angle displacement in yaw of the pose of the vehicle for $\Delta T$.

Therefore, the determination unit 121 may determine an expected lane width of a driving lane in which the vehicle is driving, over time through line equations including Equations 1 to 3. However, this is an example, and it is obvious that a method of determining an expected lane width of a driving lane is not limited to the method described above. For example, when an expected lane width of a driving lane is determined, information other than the above information of a line may be used, and the expected lane width may be determined through methods other than the line equations described above.

Furthermore, the determination unit 121 may determine whether there is a time point at which a determined expected lane width increases, and when there is a time point at which the expected lane width increases, may determine a real lane width of the driving lane at the time point at which the expected lane width increases. If it is determined using only an expected lane width that the lane width of a driving lane in which the vehicle is driving increases, when line mis-recognition using the camera 110 occurs, the expected lane width may be incorrectly determined as increasing. Therefore, in order to prevent this problem, the determination unit 121 may determine a real lane width when an expected lane width increases, to determine whether the real lane width also increases. For example, the determination unit 121 may determine a real lane width when an expected lane width increases, and determine whether the determined real lane width increases within a pre-configured reference time from a time point at which the expected lane width increases.

As another example, the determination unit 121 may identify, in data of an expected lane width determined over time, a time interval in which the expected lane width increases, and determine an increased amount of the expected lane width in the time interval. Thereafter, the determination unit 121 may determine a changed amount of a real lane width of the driving lane in the time interval, and determine whether the real lane width increases, based on the changed amount of the real lane width and a changed amount of the expected lane width.

When it is determined that the real lane width also increases at a time point at which the expected lane width increases, the determination unit 121 may determine that the vehicle has entered a stretch in which the driving lane in which the vehicle is driving expands. For example, when it is determined that an expected lane width and a real lane width increases, the determination unit 121 may determine that the vehicle has entered a stretch in which there is at least one lane among a diverged lane and an expanded lane of the driving lane in which the vehicle is driving.

In addition, when it is determined that the real lane width also increases at a time point at which the expected lane width increases, the determination unit 121 may determine whether the driving lane in which the vehicle is driving is the outermost lane. When it is determined that the real lane width increases, the determination unit 121 may collect at least one piece of information among information on both lines of the driving lane, and information relating to existence or absence of a road edge with respect to both sides of the driving lane. Thereafter, the determination unit 121 may determine whether the driving lane in which the vehicle is driving is the outermost lane, by using the collected at least one piece of information. For example, the determination unit 121 may collect information relating to existence or absence of a road edge with respect to both sides of the driving lane, and when a road edge exists at one side among both sides of the driving lane, may determine that the driving lane in which the vehicle is currently driving is the outermost lane. In addition, the determination unit 121 may collect lane information including the shapes and colors of both lines of the driving lane, and when one line of both lines of the driving lane is a line configured by a single unbroken line indicating lane change being impossible, a line configured by double lines, or a line configured by a yellow unbroken line, may determine that the driving lane in which the vehicle is currently driving is the outermost lane.

When the driving lane in which the vehicle is driving is the outermost lane, the determination unit 121 may determine that the vehicle has entered a stretch in which there is at least one lane among a diverged lane and an expanded lane of the driving lane.

Meanwhile, when the driving lane is a single one-way lane, road edges may exist at both sides of the driving lane, or both lines of the driving lane may be lines indicating lane change being impossible. Accordingly, the determination unit 121 may make mis-determination when determining whether a lane is the outermost lane. Therefore, when the driving lane is a single one-way lane, the determination unit 121 may determine which side, among both sides of the driving lane, to which an expected lane width and a real lane width increase more, based on the driving lane. Thereafter, the determination unit 121 may determine that at least one lane among a diverged lane and an expanded lane exists at a side to which the expected lane width and the real lane width increase more, and determine that the vehicle has entered a stretch in which there is at least one lane among the diverged lane and the expanded lane of the driving lane.

When it is determined that the vehicle has entered a stretch in which there is at least one lane among the diverged lane and the expanded lane of the driving lane, the determination unit 121 may transfer a result of the determination to the information generation unit 122.

When it is determined that the vehicle has entered the stretch, the information generation unit 122 may generate driving control information of the vehicle, based on information of a line, among both lines of the driving lane, existing opposite to a side at which there is at least one lane among the diverged lane and the expanded lane. For example, the information generation unit 122 may generate driving control information of the vehicle, based on at least one piece of information among the offset, a heading angle, a curvature, and a curvature derivative value of a line, among both lines of the driving lane, existing opposite to a side at which there is at least one lane among the diverged lane and the expanded lane. However, this is an example, and it is obvious that various information other than the above information may be used to generate driving control information of a vehicle.

The information generation unit 122 may output the generated driving control information of the vehicle to the driving control unit 123. When the information generation unit 122 outputs the generated driving control information, the driving control information of the vehicle generated by the information generation unit 122 may differ from driving control information of the vehicle based on information of a driving lane line previously recognized by the camera 110, and this difference may make control of vehicle driving unstable. Therefore, before outputting the generated driving control information of the vehicle, the information generation unit 122 may reflect, on the driving control information, a correction value considering a change rate of the driving control information and then output the driving control information. For example, the correction value may be a value configured by considering an upper limit value of a change rate of driving control information in order to prevent a rapid change between existing driving control information and generated driving control information. However, this is an example, and it is obvious that the invention is not necessarily limited thereto.

The driving control unit 123 may control driving of the vehicle, based on driving control information of the vehicle output from the information generation unit 122. For example, the driving control unit 123 may control a steering device included in the vehicle, based on the output driving control information, such that the vehicle does not travel to the side at which there is at least one lane among the diverged lane and the expanded lane, and travels in the driving lane where the vehicle is originally driving.

Meanwhile, in implementation of the controller 120 according to an embodiment of the present invention, the controller 120 may be implemented as one function of an advanced driver assistance system (ADAS) controller controlling an ADAS. However, this is an example, and the invention is not necessarily limited thereto. For example, the controller 120 may be implemented as a separate controller different from the ADAS controller, or may be implemented such that the functions thereof are disposed into two or more different controllers.

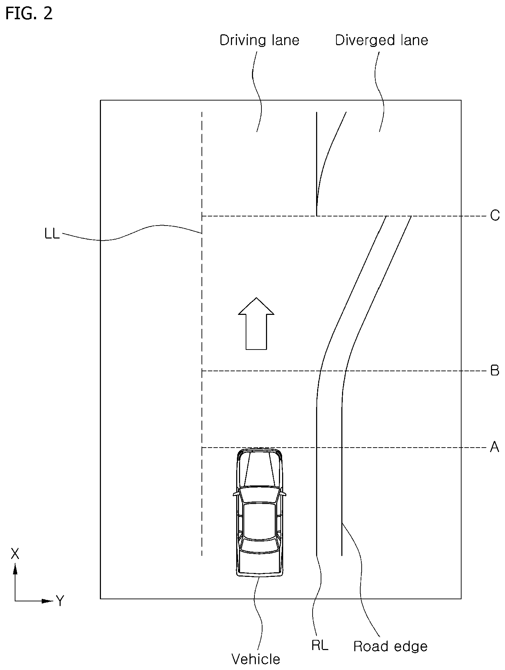

Hereinafter, a vehicle to which a vehicle control system described above has been applied will be described with reference to FIG. 2.

FIG. 2 is a diagram illustrating control of a vehicle having entered a stretch in which a lane width increases, according to an embodiment of the present invention.

Referring to FIG. 2, a vehicle is illustrated as moving in an X direction along a current driving lane. The vehicle illustrated in FIG. 2 may include a vehicle control system described with reference to FIG. 1.

While the vehicle is driving in the driving lane, when the vehicle reaches point A, the vehicle may determine an expected lane width over time. Thereafter, if it is determined that the expected lane width increases at point B, when the vehicle reaches point B during driving, the vehicle may determine whether a real lane width increases.

If the real lane width increases when the vehicle reaches point B, the vehicle may collect information on both lines of the driving lane in which the vehicle is driving, and information relating to existence or absence of a road edge with respect to both sides of the driving lane. When a line (RL) positioned at the right side among both sides of the driving lane in which the vehicle is driving is determined as an unbroken line indicating lane change being impossible, or when a road edge exists at the right side among both sides of the driving lane, the vehicle may determine that the driving lane in which the vehicle is currently driving is the outermost lane.

When the expected lane width and the real lane width increase at point B, and the driving lane in which the vehicle is driving is the outermost lane, the vehicle may determine that the vehicle has entered a stretch of the driving lane in which there is at least one lane among a diverged lane and an expanded lane. FIG. 2 is used to describe an example in which a diverged lane exists, but the same application to an expanded lane is obviously possible.

When a diverged lane exists at the right side in the driving lane of the vehicle, the diverged lane may be mis-recognized as the existing driving lane, and thus driving of the vehicle may be wrongly controlled. Therefore, when a diverged lane exists, the vehicle may control driving thereof, based on information of a line LL existing opposite to the line RL, among both lines of the driving lane, at which the diverged lane exists. In other words, when the vehicle enters a stretch in which a diverged lane exists, the vehicle may recognize a line LL, which faces, in a horizontal direction (Y direction), the line RL, among both lines of the driving lane, at which the diverged lane exists, and control driving of the vehicle, based on information of the line LL. If the vehicle passes point C, the vehicle becomes out of the stretch in which the diverged lane exists in the driving lane, and thus the vehicle may perform a previous driving control scheme again.

That is, while driving the driving lane, when the vehicle enters a stretch (stretch between point B and point C) in which a diverged lane exists, the vehicle may only recognize, rather than the line RL connecting to the diverged lane, only the line LL which is opposite to the line RL and faces same in the horizontal direction, and control driving of the vehicle, based on information of the line LL. Therefore, even when the vehicle enters a stretch in which a diverged lane exists, a line of the diverged lane is not mis-recognized and a line of a driving lane in the vehicle is driving is recognized, whereby malfunction of vehicle driving control can be prevented and driving stability of the vehicle can be improved.

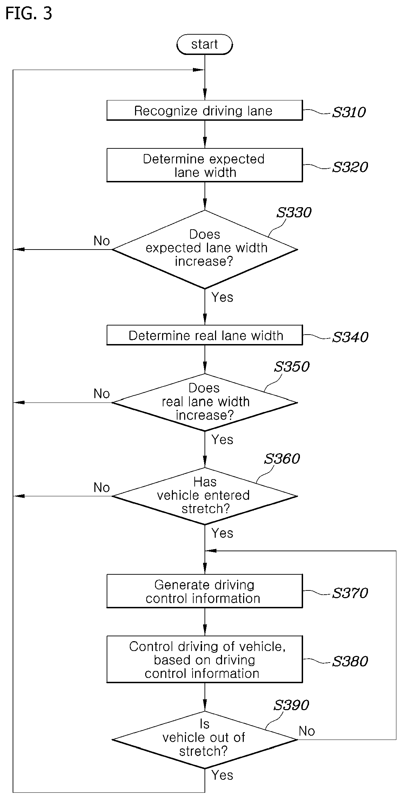

Hereinafter, a vehicle control method according to an embodiment will be described with reference to FIG. 3, based on a configuration of a vehicle control system described above with reference to FIG. 1.

FIG. 3 is a flowchart of a vehicle control method according to an embodiment of the present invention.

Referring to FIG. 3, an image of the foreground of a vehicle may be captured by means of the camera 110 included in the vehicle, and the controller 120 may recognize a driving lane in which the vehicle is currently driving, based on image information obtained by the camera 110 (operation S310), and may determine an expected lane width of the driving lane, based on recognized information (operation S320).

In determination of the expected lane width, when there is a time point at which the expected lane width increases (Yes of operation S330), the controller 120 may determine a real lane width at the time point at which the expected lane width increases (operation S340). When the real lane width increases at the time point at which the expected lane width increases (Yes of operation S350), the controller 120 may determine, based on whether the driving lane in which the vehicle is driving is the outermost lane, whether the vehicle has entered a stretch in which there is at least one lane among a diverged lane and an expanded lane (operation S360).

If the real lane width does not increase at the time point at which the expected lane width increases (No of operation S350), the controller 120 may defer a process of determining whether the vehicle has entered the stretch in which there is at least one lane among the diverged lane and the expanded lane. In addition, even though the real lane width increases at the time point at which the expected lane width increases (Yes of operation S350), when the driving lane in which the vehicle is driving is not the outermost lane, or recognition of both lines of the driving lane fails, the controller 120 may determine that the vehicle has not entered the stretch in which there is at least one lane among the diverged lane and the expanded lane (No of operation S360).

When the vehicle has entered the stretch in which there is at least one lane among the diverged lane and the expanded lane (Yes of operation S360), the controller 120 may recognize a line, among both lines of the driving lane, existing opposite to a side at which there is at least one lane among the diverged lane and the expanded lane. The controller 120 may generate driving control information of the vehicle, based on information of the recognized line (operation S370). The controller 120 may control driving of the vehicle, based on the generated driving control information, while driving in the stretch in which there is at least one lane among the diverged lane and the expanded lane (operation S380).

Thereafter, the controller 120 may determine whether the vehicle is out of the stretch in which there is at least one lane among the diverged lane and the expanded lane (operation S390). For example, the controller 120 may periodically measure a lane width, and when the lane width has been reduced to be similar to the lane width before the vehicle enters the stretch in which there is at least one lane among the diverged lane and the expanded lane, may determine that the vehicle is out of the stretch in which there is at least one lane among the diverged lane and the expanded lane (Yes of operation S390), and terminate control. In addition, when a longitudinal driving distance of the vehicle exceeds a pre-configured reference distance, the controller 120 may determine that the vehicle is out of the stretch in which there is at least one lane among the diverged lane and the expanded lane (Yes of operation S390). The controller 120 may perform corresponding control again, based on the driving lane recognized by the camera 110, or may terminate control.

Meanwhile, when the vehicle is still driving in the corresponding stretch without being out of the stretch in which there is at least one lane among the diverged lane and the expanded lane (No of operation S390), the controller 120 may continuously perform control based on control information of the vehicle.

As described above, according to the present invention, even when the lane width of a driving lane in which a vehicle is driving increases, a line positioned opposite to a side at which the lane width increases is recognized and driving of the vehicle is controlled, whereby vehicle driving mis-control caused by lane width increment can be prevented, and stability of vehicle driving control can be ensured.

The present invention as described above may be implemented as codes in a computer-readable medium in which a program is recorded. The computer-readable medium includes all types of recording devices in which data readable by a computer system are stored. Examples of the computer-readable medium include a hard disk drive (HDD), a solid state disk (SSD), a silicon disk drive (SDD), a ROM, a RAM, a CD-ROM, a magnetic tape, a floppy disk, an optical data storage device, and the like.

**Claims**

1. A vehicle control method comprising:

   recognizing (S310), by a controller, a driving lane ahead of a vehicle by utilizing a camera included in the vehicle, and determining (S320), by the controller, an expected lane width of the driving lane over time;
   determining (S350), by the controller, whether a real lane width of the driving lane increases at a time point at which the determined expected lane width increases; and
   controlling (S380) driving, by the controller and in response to the determination that the real lane width is increasing, based on information on a line, wherein the line is one among two lines of the driving lane and positioned opposite a side of the driving lane in which the lane width increases.

2. The vehicle control method of claim 1, wherein the determining (S320) of the expected lane width comprises:

recognizing, by the controller, the driving lane ahead of the vehicle by utilizing image information obtained by the camera; and

determining, by the controller, an expected lane width of the driving lane, based on information included in the recognized driving lane.

3. The vehicle control method of claim 2, wherein the determining (S320) of the expected lane width comprises determining, by the controller, an expected lane width of a driving lane recognized by the camera, based on a longitudinal distance of the vehicle and at least one information among an offset, a heading angle, a curvature, and a curvature derivative value of the line.

4. The vehicle control method of any one of claims 1 to 3, wherein the determining (S350) of whether the real lane width increases comprises:

determining, by the controller, a real lane width of the driving lane at a time point at which the expected lane width increases; and

determining, by the controller, whether the determined real lane width increases within a pre-configured reference time from the time point.

5. The vehicle control method of any one of claims 1 to 4, wherein the determining (S350) of whether the real lane width increases comprises:

determining, by the controller, an increased amount of the expected lane width in a time interval in which the expected lane width increases;

determining, by the controller, a changed amount of the real lane width of the driving lane in the time interval; and

determining, by the controller, whether the real lane width increases, based on the changed amount of the real lane width and the increased amount of the expected lane width.

6. The vehicle control method of any one of claims 1 to 5, wherein the controlling (S380) of the driving comprises determining, by the controller, that the vehicle has entered a stretch in which the driving lane includes at least one lane among a diverged lane and an expanded lane in response to the determination that the real lane width is increasing.

7. The vehicle control method of claim 6, wherein the controlling (S380) of the driving comprises:

in response to the vehicle entering the stretch, generating (S370), by the controller, driving control information of the vehicle, based on information of the line; and

reflecting, by the controller, a pre-configured correction value on the generated driving control information and outputting the driving control information.

8. The vehicle control method of claim 7, wherein the generating (S370) of the driving control information comprises generating, by the controller, driving control information of the vehicle, based on at least one information among an offset, a heading angle, a curvature, and a curvature derivative value of the line.

9. The vehicle control method of any one of claims 1 to 8, wherein the controlling (S380) of the driving comprises:

determining, by the controller and in response to the determination that the real lane width is increasing, whether the driving lane is an outermost lane; and

determining, by the controller and in response to the driving lane being the outermost lane, that the vehicle has entered a stretch in which the driving lane includes at least one lane among a diverged lane and an expanded lane.

10. The vehicle control method of claim 9, wherein the determining of whether the driving lane is the outermost lane comprises:

collecting, by the controller and in response to the determination that the real lane width is increasing, at least one piece of information among information on the two lines of the driving lane, and information relating to existence or absence of a road edge with respect to both sides of the driving lane; and

determining, by the controller, whether the driving lane is an outermost lane, by utilizing the collected at least one piece of information.

11. A vehicle control system comprising:

a camera (110) configured to be in a vehicle and to capture an image of a foreground of the vehicle; and
a controller (120) configured to:

recognize a driving lane, based on an image captured by the camera,
determine an expected lane width of the driving lane over time,
determine whether a real lane width of the driving lane increases at a time point at which the determined expected lane width increases, and
control driving, based on information on a line, when it is determined that the real lane width increases, wherein the line is one among two lines of the driving lane and positioned opposite a side of the driving lane in which the lane width increases.

12. The vehicle control system of claim 11, wherein the controller (120) is further configured to:
determine a real lane width of the driving lane at a time point at which the expected lane width increases, and
determine whether the determined real lane width increases within a pre-configured reference time from the time point.

13. The vehicle control system of claim 11 or 12, wherein the controller (120) is further configured to:

determine an increased amount of the expected lane width in a time interval in which the expected lane width increases, determine a changed amount of the real lane width of the driving lane in the time interval, and determine whether the real lane width increases, based on the changed amount of the real lane width and the increased amount of the expected lane width.

14. The vehicle control system of any one of claims 11 to 13, wherein the controller (120) is further configured to:

determine that the vehicle has entered a stretch in which the driving lane includes at least one lane among a diverged lane and an expanded lane, when it is determined that the real lane width increases,
generate driving control information of the vehicle, based on information of the line, when it is determined that the vehicle has entered the stretch,
reflect a pre-configured correction value on the generated driving control information, and
output the driving control information.

15. The vehicle control system of any one of claims 11 to 14, wherein the controller (120) is further configured to:
determine whether the driving lane is an outermost lane when it is determined that the real lane width increases, and
determine that the vehicle has entered a stretch in which the driving lane includes at least one lane among a diverged lane and an expanded lane when the driving lane is the outermost lane.

**Patentansprüche**

1. Fahrzeugsteuerungsverfahren, umfassend:

Erkennen (S310) einer Fahrspur vor einem Fahrzeug durch eine Steuerung unter Verwendung einer im Fahrzeug enthaltenen Kamera und Bestimmen (S320) einer erwarteten Spurbreite der Fahrspur im Laufe der Zeit durch die Steuerung;
Bestimmen (S350) durch die Steuerung, ob eine tatsächliche Spurbreite der Fahrspur zu einem Zeitpunkt zunimmt, zu dem die bestimmte erwartete Spurbreite zunimmt; und
Steuern (S380) des Fahrens durch die Steuerung und als Reaktion auf die Bestimmung, dass die tatsächliche Spurbreite zunimmt, basierend auf Informationen zu einer Linie, wobei die Linie eine von zwei Linien der Fahrspur ist und gegenüber einer Seite der Fahrspur positioniert ist, auf der die Spurbreite zunimmt.

2. Fahrzeugsteuerungsverfahren nach Anspruch 1, wobei das Bestimmen (S320) der erwarteten Spurbreite umfasst:

Erkennen der Fahrspur vor dem Fahrzeug durch die Steuerung unter Verwendung von Bildinformationen, die von der Kamera erhalten werden; und
Bestimmen einer erwarteten Spurbreite der Fahrspur durch die Steuerung basierend auf Informationen, die in der erkannten Fahrspur enthalten sind.

3. Fahrzeugsteuerungsverfahren nach Anspruch 2, wobei das Bestimmen (S320) der erwarteten Spurbreite ein Bestimmen einer erwarteten Spurbreite einer von der Kamera erkannten Fahrspur durch die Steuerung basierend auf einem Längsabstand des Fahrzeugs und mindestens einer Information aus einem Versatz, einem Kurswinkel, einer Krümmung und einem Krümmungsableitungswert der Linie umfasst.

4. Fahrzeugsteuerungsverfahren nach einem der Ansprüche 1 bis 3, wobei das Bestimmen (S350), ob die tatsächliche Spurbreite zunimmt, umfasst:

Bestimmen einer tatsächlichen Spurbreite der Fahrspur durch die Steuerung zu einem Zeitpunkt, zu dem die erwartete Spurbreite zunimmt; und
Bestimmen durch die Steuerung, ob die bestimmte tatsächliche Spurbreite innerhalb einer vorkonfigurierten Referenzzeit ab dem Zeitpunkt zunimmt.

5. Fahrzeugsteuerungsverfahren nach einem der Ansprüche 1 bis 4, wobei das Bestimmen (S350), ob die tatsächliche Spurbreite zunimmt, umfasst:

Bestimmen eines vergrößerten Betrags der erwarteten Spurbreite durch die Steuerung in einem Zeitintervall, in dem die erwartete Spurbreite zunimmt;
Bestimmen eines geänderten Betrags der tatsächlichen Spurbreite der Fahrspur in dem Zeitintervall durch die Steuerung und
Bestimmen durch die Steuerung, ob die tatsächliche Spurbreite zunimmt, basierend auf dem geänderten Betrag der tatsächlichen Spurbreite und dem erhöhten Betrag der erwarteten Spurbreite.

6. Fahrzeugsteuerungsverfahren nach einem der Ansprüche 1 bis 5, wobei das Steuern (S380) des Fahrens ein Bestimmen durch die Steuerung umfasst, dass das Fahrzeug in einen Abschnitt eingefahren ist, in dem die Fahrspur mindestens eine Spur aus einer abzweigenden Spur und einer erweiterten Spur als Reaktion auf die Bestimmung, dass die tatsächliche Spurbreite zunimmt, enthält.

7. Fahrzeugsteuerungsverfahren nach Anspruch 6, wobei das Steuern (S380) des Fahrens umfasst:

als Reaktion darauf, dass das Fahrzeug in den Abschnitt einfährt, Erzeugen (S370) von Fahrsteuerungsinformationen des Fahrzeugs durch die Steuerung basierend auf Informationen über die Linie; und
Anwenden eines vorkonfigurierten Korrekturwerts auf die erzeugten Fahrsteuerungsinformationen durch die Steuerung und Ausgeben der Fahrsteuerungsinformationen.

8. Fahrzeugsteuerungsverfahren nach Anspruch 7, wobei das Erzeugen (S370) der Fahrsteuerungsinformationen ein Erzeugen von Fahrsteuerungsinformationen des Fahrzeugs durch die Steuerung basierend auf mindestens einer Information aus einem Versatz, einem Kurswinkel, einer Krümmung und einem Krümmungsableitungswert der Linie umfasst.

9. Fahrzeugsteuerungsverfahren nach einem der Ansprüche 1 bis 8, wobei die Steuerung (S380) des Fahrens umfasst:

Bestimmen, ob die Fahrspur eine äußerste Spur ist, durch die Steuerung und als Reaktion auf die Bestimmung, dass die tatsächliche Spurbreite zunimmt; und
Bestimmen, dass das Fahrzeug in einen Abschnitt eingefahren ist, in dem die Fahrspur mindestens eine Spur aus einer abzweigenden Spur und einer erweiterten Spur enthält, durch die Steuerung und als Reaktion darauf, dass die Fahrspur die äußerste Spur ist.

10. Fahrzeugsteuerungsverfahren nach Anspruch 9, wobei das Bestimmen, ob die Fahrspur die äußerste Spur ist, umfasst:

Sammeln mindestens einer Information aus Informationen über die zwei Linien der Fahrspur und Informationen bezüglich eines Vorhandenseins oder Fehlens eines Straßenrands in Bezug auf beide Seiten der Fahrspur durch die Steuerung und als Reaktion auf die Bestimmung, dass die tatsächliche Spurbreite zunimmt; und
Bestimmen durch die Steuerung, ob die Fahrspur eine äußerste Spur ist, indem die mindestens eine gesammelte Information verwendet wird.

**11.** Fahrzeugsteuersystem, umfassend:

eine Kamera (110), die so eingerichtet ist, dass sie in einem Fahrzeug ist und ein Bild eines Vordergrunds des Fahrzeugs aufnimmt; und
eine Steuerung (120), die eingerichtet ist zum:

Erkennen einer Fahrspur basierend auf einem von der Kamera aufgenommenen Bild,
Bestimmen einer erwarteten Spurbreite der Fahrspur im Laufe der Zeit,
Bestimmen, ob eine tatsächliche Spurbreite der Fahrspur zu einem Zeitpunkt zunimmt, zu dem die bestimmte erwartete Spurbreite zunimmt, und
Steuern des Fahrens basierend auf Informationen zu einer Linie, wenn bestimmt wird, dass die tatsächliche Spurbreite zunimmt, wobei die Linie eine von zwei Linien der Fahrspur ist und gegenüber einer Seite der Fahrspur positioniert ist, auf der die Spurbreite zunimmt.

**12.** Fahrzeugsteuersystem nach Anspruch 11, wobei die Steuerung (120) weiterhin eingerichtet ist zum:
Bestimmen einer tatsächlichen Spurbreite der Fahrspur zu einem Zeitpunkt, zu dem die erwartete Spurbreite zunimmt, und Bestimmen, ob die bestimmte tatsächliche Spurbreite innerhalb einer vorkonfigurierten Referenzzeit ab dem Zeitpunkt zunimmt.

**13.** Fahrzeugsteuersystem nach Anspruch 11 oder 12, wobei die Steuerung (120) weiterhin eingerichtet ist zum:

Bestimmen eines erhöhten Betrags der erwarteten Spurbreite in einem Zeitintervall, in dem die erwartete Spurbreite zunimmt, Bestimmen eines geänderten Betrags der tatsächlichen Spurbreite der Fahrspur im Zeitintervall, und
Bestimmen, ob die tatsächliche Spurbreite zunimmt, basierend auf dem geänderten Betrag der tatsächlichen Spurbreite und dem erhöhten Betrag der erwarteten Spurbreite.

**14.** Fahrzeugsteuersystem nach einem der Ansprüche 11 bis 13, wobei die Steuerung (120) weiterhin eingerichtet ist zum:

Bestimmen, dass das Fahrzeug in einen Abschnitt eingefahren ist, in dem die Fahrspur mindestens eine Spur aus einer abzweigenden Spur und einer erweiterten Spur enthält, wenn bestimmt wird, dass die tatsächliche Spurbreite zunimmt,
Erzeugen von Fahrsteuerungsinformationen des Fahrzeugs basierend auf Informationen über die Linie, wenn bestimmt wird, dass das Fahrzeug in den Abschnitt eingefahren ist,
Anwenden eines vorkonfigurierten Korrekturwerts auf die erzeugten Fahrsteuerungsinformationen und
Ausgeben der Fahrsteuerungsinformationen.

**15.** Fahrzeugsteuersystem nach einem der Ansprüche 11 bis 14, wobei die Steuerung (120) weiterhin eingerichtet ist zum:

Bestimmen, ob die Fahrspur eine äußerste Spur ist, wenn bestimmt wird, dass die tatsächliche Spurbreite zunimmt, und
Bestimmen, dass das Fahrzeug in einen Abschnitt eingefahren ist, in dem die Fahrspur mindestens eine Spur aus einer abzweigenden Spur und einer erweiterten Spur enthält, wenn die Fahrspur die äußerste Spur ist.

**Revendications**

**1.** Procédé de commande de véhicule comprenant:

la reconnaissance (S310), par un dispositif de commande, d'une voie de circulation devant un véhicule à l'aide d'une caméra incluse dans le véhicule, et la détermination (S320), par le dispositif de commande, d'une largeur attendue de la voie de circulation au fil du temps;
la détermination (S350), par le dispositif de commande, si la largeur réelle de la voie de circulation augmente à un moment où la largeur prévue de la voie augmente; et
la régulation (S380) de la conduite, par le dispositif de commande et en réponse à la détermination que la largeur réelle de la voie augmente, sur la base d'informations concernant une ligne, la ligne est l'une des deux lignes de la voie de circulation et est positionnée à l'opposé d'un côté de la voie de conduite où la largeur de la voie augmente.

**2.** Procédé de commande de véhicule selon la revendication 1, dans lequel la détermination (S320) de la largeur prévue de la voie comprend:

la reconnaissance, par le dispositif de commande, de la voie de circulation devant le véhicule en utilisant les informations d'image obtenues par la caméra; et
la détermination, par le dispositif de commande, d'une largeur de voie prévue pour la voie de circulation, sur la base des informations contenues dans la voie de circulation reconnue.

**3.** Procédé de commande de véhicule selon la revendication 2, dans lequel la détermination (S320) de la largeur prévue de la voie de circulation consiste à: déterminer, par le dispositif de commande, la largeur prévue de voie d'une voie de circulation reconnue par la caméra, sur la base d'une distance longitudinale du véhicule et d'au moins une information parmi un décalage, un angle de cap, une courbure et une valeur dérivée de la courbure de la ligne.

**4.** Procédé de commande de véhicule selon l'une quelconque des revendications 1 à 3, dans lequel la détermination (S350) selon laquelle la largeur de la voie réelle augmente ou non, consiste à:

déterminer, par le dispositif de commande, la largeur réelle de voie de la voie de circulation à un moment où la largeur prévue de voie augmente; et
déterminer, par le dispositif de commande, si la largeur réelle de voie déterminée augmente dans un délai de référence préconfiguré à partir du point temporel.

**5.** Procédé de commande de véhicule selon l'une quelconque des revendication 1 à 4, dans lequel la détermination (S350) selon laquelle la largeur de la voie réelle augmente ou non, consiste à:

déterminer, par le dispositif de commande, d'une augmentation de la largeur prévue de voie dans un intervalle de temps au cours duquel la largeur prévue de voie augmente;
déterminer, par le dispositif de commande, un changement de la largeur réelle de voie de la voie de circulation dans l'intervalle de temps; et
déterminer, par le dispositif de commande, si la largeur réelle de voie augmente, en fonction du changement de la largeur réelle de la voie et de l'augmentation de la largeur prévue de voie.

**6.** Procédé de commande de véhicule selon l'une quelconque des revendications 1 à 5, dans lequel la régulation (S380) de la conduite consiste à déterminer, par le dispositif de commande, que le véhicule est engagé sur un tronçon où la voie de circulation comprend au moins une voie parmi une bretelle et une voie élargie en réponse au fait qu'il est déterminé que la largeur réelle de la voie augmente.

**7.** Procédé de commande de véhicule selon la revendication 6, dans lequel la régulation (S380) de la conduite consiste à:

en réponse à l'entrée du véhicule sur le tronçon, générer (S370), par le dispositif de commande, des informations de régulation de conduite du véhicule, sur la base des informations de la ligne; et
refléter, par le dispositif de commande, une valeur de correction préconfigurée sur les informations de régulation de conduite générées et délivrer les informations de régulation de conduite.

**8.** Procédé de commande de véhicule selon la revendication 7, dans lequel la génération (S370) des informations de régulation de conduite consiste à générer, par le dispositif de commande, les informations de régulation de conduite du véhicule, sur la base d'au moins une information parmi un décalage, un angle de cap, une courbure et une valeur dérivée de la courbure de la ligne.

**9.** Procédé de commande de véhicule selon l'une quelconque des revendications 1 à 8, dans lequel la régulation (S380) de la conduite consiste à:

déterminer, par le dispositif de commande et en réponse à la détermination selon laquelle la largeur réelle de la voie augmente, si la voie de circulation est une voie la plus à l'extérieur; et
déterminer, par l'organe de commande et en réponse au fait que la voie de circulation est la voie la plus extérieure, que le véhicule est engagé sur un tronçon où la voie de circulation comprend au moins une voie parmi une voie qui bifurque et une voie élargie.

10. Procédé de commande de véhicule selon la revendication 9, dans lequel la détermination selon laquelle la voie de circulation est la voie la plus à l'extérieur consiste à:

collecter, par le dispositif de commande et en réponse à la détermination que la largeur réelle de la voie augmente, au moins une information parmi les informations sur les deux lignes de la voie de circulation et les informations relatives à l'existence ou à l'absence d'un bord de route des deux côtés de la voie de circulation; et déterminer, par le dispositif de commande, si la voie de circulation est une voie extérieure, en utilisant l'au moins une information collectée.

11. Système de commande de véhicule comprenant:
une caméra (110) conçue pour être installée dans un véhicule et pour capturer une image d'un premier plan du véhicule; et

reconnaître une voie de circulation, sur la base d'une image capturée par la caméra, déterminer la largeur prévue de la voie de circulation au fil du temps, déterminer (S350), par le dispositif de commande, si la largeur réelle de la voie de circulation augmente à un moment où la largeur prévue de la voie augmente; et réguler (S380) la conduite, sur la base des informations sur une ligne, lorsqu'il est déterminé que la largeur réelle de la voie augmente, la ligne étant l'une des deux lignes de la voie de circulation et est positionnée à l'opposé d'un côté de la voie de circulation où la largeur de voie augmente.

12. Système de commande de véhicule selon la revendication 11, dans lequel le dispositif de commande (120) est en outre conçu pour:
déterminer la largeur réelle de la voie de circulation à un moment où la largeur prévue de la voie augmente, et déterminer si la largeur réelle déterminée de la voie augmente dans un délai de référence préconfiguré à partir dudit moment.

13. Système de commande de véhicule selon la revendication 11 ou 12, dans lequel le dispositif de commande (120) est en outre conçu pour:

déterminer une ampleur de l'augmentation de la largeur prévue de la voie dans un intervalle de temps au cours duquel la largeur prévue de la voie augmente, déterminer une modification de la largeur réelle de la voie de circulation dans l'intervalle de temps, et déterminer si la largeur réelle de voie augmente, en fonction du changement de la largeur réelle de la voie et de l'augmentation de la largeur prévue de voie.

14. Système de commande de véhicule selon l'une quelconque des revendications 11 à 13, dans lequel le dispositif de commande (120) est en outre conçu pour:

déterminer que le véhicule est engagé sur un tronçon où la voie de circulation comprend au moins une voie parmi une voie qui bifurque et une voie élargie, lorsqu'il est déterminé que la largeur réelle de la voie augmente, générer des informations de régulation de conduite du véhicule, sur la base des informations de la ligne, lorsqu'il est déterminé que le véhicule est engagé sur le tronçon, répercuter une valeur de correction préconfigurée sur les informations de régulation de conduite générées, et délivrer les informations de régulation de conduite.

15. Système de commande de véhicule selon l'une quelconque des revendications 11 à 14, dans lequel le dispositif de commande (120) est en outre conçu pour:
déterminer si la voie de circulation est une voie la plus à l'extérieur lorsqu'il est déterminé que la largeur réelle de la voie augmente, et déterminer que le véhicule est engagé sur un tronçon où la voie de circulation comprend au moins une voie parmi une voie qui bifurque et une voie élargie lorsque la voie de circulation est la voie la plus extérieure.

FIG. 1

FIG. 2

FIG. 3

start

Recognize driving lane —S310

Determine expected lane width —S320

S330
Does expected lane width increase?
No
Yes

Determine real lane width —S340

S350
Does real lane width increase?
No
Yes

S360
Has vehicle entered stretch?
No
Yes

Generate driving control information —S370

Control driving of vehicle, based on driving control information —S380

S390
Is vehicle out of stretch?
No
Yes

**EP 4 397 558 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200070826 A1
- US 20150367778 A1